# FASCICULE DE BREVET EUROPEEN

(11) **EP 3 502 317 B1**
(45) Date de publication et mention de la délivrance du brevet: **17.11.2021**
(21) Numéro de dépôt: 18215736.2
(22) Date de dépôt: 21.12.2018
(51) Int. Cl.: C25B 1/04, C25B 1/23, C25B 3/03, C25B 3/26, C25B 9/75, C25B 9/77, C25B 15/02, C25B 15/08, C10L 3/08

(54) **PROCEDE DE FONCTIONNEMENT EN MODE DE DEMARRAGE OU EN MODE STAND-BY D'UNE UNITE POWER-TO-GAS COMPORTANT UNE PLURALITE DE REACTEURS D'ELECTROLYSE (SOEC) OU CO-ELECTROLYSE A HAUTE TEMPRATURE**
FUNKTIONSVERFAHREN IM EINSCHALT- ODER IM STAND-BY-MODUS EINER POWER-TO-GAS-EINHEIT, DIE EINE MEHRZAHL VON HOCHTEMPERATUR-ELEKTROLYSE-(SOEC) ODER CO-ELEKTROLYSE-REAKTOREN UMFASST
METHOD FOR OPERATING IN START-UP MODE OR STAND-BY MODE A POWER-TO-GAS UNIT COMPRISING A PLURALITY OF HIGH-TEMPERATURE ELECTROLYSIS (SOEC) OR CO-ELECTROLYSIS REACTORS

(30) Priorité: 22.12.2017 FR 1762904
(43) Date de publication de la demande: 26.06.2019
(73) Titulaire: Commissariat à l'Energie Atomique et aux Energies Alternatives, 75015 Paris (FR)
(72) Inventeur: BRUNOT, Aymeric, 38054 GRENOBLE Cedex 09 (FR); LACROIX, Vincent, 38054 GRENOBLE Cedex 09 (FR)
(74) Mandataire: Nony

(56) Documents cités:
- WO-A1-2015/083024

## Description

### Domaine technique

La présente invention concerne le domaine de la conversion d'électricité en gaz, plus connu sous la dénomination anglo-saxonne « power-to-gas ».

La conversion power-to-gas repose sur le stockage de la surproduction des énergies renouvelables grâce à leur transformation en hydrogène ou en méthane de synthèse. Les réseaux existants de gaz naturel peuvent accueillir l'hydrogène ou le méthane ainsi produit et permettent leur stockage, leur transport et leur valorisation par mélange avec le gaz naturel.

La présente invention a trait à une unité de power-to-gas sous forme de méthane mettant en œuvre une étape d'électrolyse de l'eau à haute température (EHT, ou EVHT pour électrolyse de la vapeur d'eau à haute température, ou HTE acronyme anglais pour « *High Temperature Electrolysis* », ou encore HTSE acronyme anglais pour « *High Temperature Steam Electrolysis* ») ou une étape dite de co-électrolyse de l'eau et dioxyde de carbone CO₂ à haute température, au sein d'une pluralité de réacteurs à empilement de cellules d'électrolyse de type SOEC (acronyme anglais pour « *Solid Oxyde Electrolyzer Cell* ») que l'on alimente en électricité.

L'invention a trait plus particulièrement à la production de méthane à partir des réacteurs d'électrolyse ou de co-électrolyse de l'unité, lors du démarrage ou en cas de faible niveau d'électricité disponible, selon un mode dit de stand-by.

### Art antérieur

Parmi les solutions de stockage massif d'énergie déjà envisagées, le stockage hydraulique est déjà largement répandu. Les capacités restantes de ce type de stockage risquent d'être rapidement saturées. En outre, les systèmes hydrauliques nécessitent des conditions géographiques et géologiques particulières et peuvent de ce fait s'avérer assez onéreuses et de potentiel d'expansion limité. Pour les problèmes de stockage à venir, le stockage hydraulique ne pourra donc être qu'une solution partielle.

Une solution alternative de stockage a également été envisagée : il s'agit du stockage par air comprimé (CAES acronyme anglais pour « *Compressed Air Energy Storage* »). Selon cette technologie, il est prévu de stocker de l'air comprimé produit avec l'électricité dans des cavités sous-terraines. Ces dernières exigent elles aussi des caractéristiques géologiques spécifiques, comme les cavités salines. Toutefois, le rendement de cette solution de stockage n'est pas satisfaisant.

L'hydrogène enfin est annoncé comme un vecteur d'énergie susceptible de pouvoir stocker massivement l'électricité dans certaines configurations : on peut citer ici le projet déjà réalisé en corse sous l'acronyme MYRTE (acronyme de Mission hYdrogène Renouvelable pour l'Intégration au Réseau Electrique) avec la participation de la demanderesse.

Cependant, toutes ces solutions de stockage massif d'énergie requièrent des infrastructures importantes à développer (sites propres pour l'hydraulique, cavités sous-terraines, systèmes de stockage hydrogène). C'est pourquoi, plus récemment, le stockage massif d'énergie par conversion de l'électricité renouvelable en énergie chimique via la production de gaz combustible de synthèse pouvant être stocké dans des infrastructures préexistantes a fait une percée significative, représentant une alternative de stockage à fort potentiel. On peut citer ici la demande de brevet US 2009/0289227 qui évoque des solutions techniques de conversion.

Par ailleurs, réduire les émissions de dioxyde de carbone CO₂ résultant de l'utilisation d'énergies fossiles, valoriser autant que possible le CO₂ issu de l'utilisation de ces énergies plutôt que le stocker pour une durée indéterminée, utiliser à la demande l'électricité issue de sources d'énergie dite décarbonée, notamment lors des périodes de surproduction, transformer cette électricité en un produit stockable permettant éventuellement de produire de l'électricité à la demande lors des périodes de déficits de production sans avoir à faire appel à des énergies fortement carbonées sont autant d'objectifs à atteindre dans un souci d'efficacité environnementale globale.

La fabrication d'un gaz combustible de synthèse à partir de vapeur d'eau et de dioxyde de carbone CO₂, grâce à de l'électricité dite décarbonée, répond à ces objectifs.

Ainsi, plusieurs études ont identifié la solution Power-to-Gas comme une solution à fort potentiel, au travers de la transformation de cette électricité excédentaire en gaz de synthèse pouvant être stocké et valorisé par le biais des infrastructures gazières actuelles, en particulier le réseau de transport et de distribution du Gaz Naturel. Cette utilisation d'infrastructures existantes permet de disposer de capacités massives de stockage de l'énergie de sources renouvelables sans nécessiter d'investissements spécifiques dans le stockage (voir publication [1]), ce qui n'est pas le cas des autres solutions de stockage de l'électricité comme les stations de pompage ou CAES évoquées ci-avant.

Pour cette raison, la solution de Power-to-Gas est considérée comme la solution de conversion et de stockage de l'énergie à privilégier dès lors que la pénétration des énergies renouvelables rendra utile un stockage à moyen-terme, voire à long-terme (saisonnier) de l'électricité : [2], [3].

La production d'un méthane de synthèse dans une unité Power-to-Gas est particulièrement adaptée à l'exploitation des infrastructures de Gaz Naturel : [1]. Ce méthane est typiquement produit sur base d'électricité, par électrolyse de l'eau (production d'hydrogène), puis en effectuant dans un réacteur dédié une réaction de méthanation entre l'hydrogène et le CO₂ issu d'une source extérieure.

L'électrolyse de la vapeur d'eau H₂O pour produire de l'hydrogène H2 et/ou la co-électrolyse de H₂O+CO₂ à haute température au sein d'un électrolyseur à oxydes solides est une des possibilités pour produire les réactifs utiles à la méthanation. Les réactions d'électrolyse de la vapeur d'eau (I) et de co-électrolyse de H₂O+CO₂ (II) se font selon les équations suivantes :
Electrolyse de l'eau:

   H₂O →H₂ + 1/2O₂ (I)
Co-électrolyse:

   CO₂ + H₂O → CO + H₂ + O₂ (II).

L'électrolyse à haute température dans des réacteurs à cellules à oxydes solides (SOEC) permet d'atteindre un rendement électrique particulièrement élevé par rapport aux technologies à basses températures comme l'électrolyse alcaline ou PEM (acronyme anglo-saxon pour « Proton Exchange Membrane »), car la chaleur dégagée par le réacteur de méthanation peut être valorisée au sein du procédé.

La co-électrolyse SOEC de vapeur d'eau et de CO₂, pour produire un gaz de synthèse (mélange de H2, CO et CO2) qui est ensuite injecté dans le réacteur de méthanation pour produire le méthane de synthèse, présente le même avantage.

En outre, le transport, le stockage et l'utilisation (dont l'injection éventuelle dans le réseau de gaz) de l'hydrogène nécessitent sa mise en pression. Il est déjà connu qu'au lieu de comprimer l'hydrogène produit, ce qui présente un coût important, de réaliser l'électrolyse de l'eau directement à partir de vapeur d'eau sous pression, l'eau étant alors comprimée à l'état liquide au préalable, ce qui est beaucoup moins coûteux.

La production d'hydrogène ou de gaz de synthèse par électrolyse EHT ou co-électrolyse à haute température requiert par définition une électricité disponible en quantité suffisante.

Or, lorsque les sources d'énergie, dite décarbonées, sont par nature intermittentes (éolien, solaire), il peut se produire des situations dans lesquelles il n'est plus possible avec de telles sources, d'alimenter électriquement à la fois tous les réacteurs d'électrolyse EHT ou de co-électrolyse à haute température d'une même unité power-to-gaz, ou tout du moins en quantité suffisante pour que la mise en œuvre soit effective.

Par ailleurs, une fois que de tels réacteurs SOEC permettant l'électrolyse haute température (EHT) et la co-électrolyse haute température ont été mis en fonctionnement, il est nécessaire d'en assurer le maintien en température, et ce malgré l'intermittence possible de la production d'électricité, de manière d'une part, à éviter un cyclage thermique pouvant l'endommager et d'autre part, à offrir des possibilités de mise en marche rapide dès la disponibilité à nouveau d'électricité. Autrement dit, limiter les variations de température au niveau des composants des réacteurs permet de réduire les risques de détériorations, et de faciliter les redémarrages rapides de l'unité Power-to-Gas, en cas d'électricité à faible coût à nouveau disponible.

Il est donc intéressant de s'assurer d'un maintien à haute température des réacteurs SOEC permettant l'électrolyse haute température (EHT) et la co-électrolyse haute température durant leur période d'inactivité, malgré des déperditions thermiques inéluctables.

Plusieurs solutions ont déjà été envisagées pour résoudre ce problème de maintien en température des réacteurs SOEC permettant l'électrolyse haute température (EHT) et la coélectrolyse haute température, en l'absence d'électricité disponible, et ce malgré les déperditions thermiques.

La première solution consiste en un chauffage électrique. Cette solution n'est pas viable du fait des coûts énergétique et financier engendrés par le coût de l'électricité typiquement élevé durant la période de stand-by de l'unité.

Une autre solution prévoit un apport de chaleur par combustion de combustible fossile. Là encore, les coûts énergétique et financier du combustible ne rendent pas viable cette solution.

Une autre solution est d'inverser le fonctionnement de chacun des réacteurs SOEC permettant l'électrolyse haute température (EHT) et la co-électrolyse haute température, c'est-à-dire de le faire fonctionner en pile à combustible SOFC (acronyme anglais pour « Solid Oxide Fuel Cell ») pour produire du courant à partir d'hydrogène H₂, de syngas (mélange d'hydrogène H₂ et de monoxyde de carbone CO), ou de méthane ce qui permet de maintenir en température le réacteur. Cela présente l'inconvénient majeur de produire du courant électrique non nécessairement valorisable, dès qu'il n'y a plus d'électricité disponible depuis les sources extérieures. En outre, un autre inconvénient majeur est que l'on consomme, c'est-à-dire qu'on brûle, ainsi du combustible, i.e. H₂, syngas ou méthane, uniquement à des fins de maintien en température du réacteur et sans obtention d'autre produit combustible mais uniquement d'électricité qui n'est pas nécessairement valorisable à ce moment précis.

Une dernière solution est celle envisagée par la Demanderesse dans le brevet EP3077574B1. Cette solution repose sur la capacité d'un réacteur SOEC à catalyser la réaction exothermique de méthanation, pour assurer son maintien en température. Dans ce schéma de fonctionnement, un réacteur SOEC fonctionne dans un premier temps, en mode nominal, comme un électrolyseur/co-électrolyseur classique produisant de l'hydrogène H2 ou du syngas, qui est stocké. Dans un second temps, qui correspond au mode stand-by, ce même réacteur est alimenté par sa propre production précédente, avec ajout de CO₂ dans de cas de l'électrolyse ayant uniquement produit de l'hydrogène H2 dans un premier temps, ce qui génère une réaction interne de méthanation dont la production de chaleur permet le maintien en température du réacteur, sans consommation de combustible mais en progressant au contraire vers la production de méthane. Si cela est encore nécessaire, une finalisation de la méthanation peut ensuite avoir lieu dans un réacteur de méthanation dédié. Cette solution est globalement satisfaisant mais présente certains inconvénients, comme suit:
- la nécessité intrinsèque de stocker la production de l'hydrogène ou du syngas lors du fonctionnement nominal en électrolyse/co-électrolyse avant de la réutiliser en mode stand-by pour le maintien en température du même réacteur;
- en l'absence de variation de température ou de pression entre les phases d'électrolyse/co-électrolyse et de méthanation, déplaçant les équilibres réactionnels de méthanation, seule la voie électrolyse avec ajout postérieur du réactif CO₂ permet effectivement une méthanation exothermique pour le maintien en température;
- la valorisation de la chaleur de méthanation n'étant pas prise en compte dans le mode de fonctionnement en électrolyse/co-électrolyse, le fonctionnement en mode stand-by pénalise thermiquement la phase amont d'électrolyse/co-électrolyse, rendant nécessaire une compensation thermique qui peut impacter la consommation énergétique globale et générer une perte de rendement.

Il existe donc un besoin pour améliorer le procédé de fonctionnement en mode stand-by d'une unité Power-to-Gas comprenant plusieurs réacteurs d'électrolyse EHT/SOEC ou de co-électrolyse, afin de les maintenir en température en l'absence d'électricité disponible pour tous les réacteurs, notamment sans avoir à inverser chacun des réacteurs en pile à combustible SOFC et/ou sans avoir à brûler du combustible H₂ ou gaz pouvant être de synthèse et/ou sans avoir à stocker une production préalable d'hydrogène ou de syngas.

Le but de l'invention est de répondre au moins en partie à ce besoin.

### Exposé de l'invention

Pour ce faire, l'invention concerne, sous l'un de ses aspects, Procédé de fonctionnement en mode de démarrage ou en mode stand-by d'une unité, dite power-to-gas, comprenant un nombre N de réacteurs (1) à empilement de cellules d'électrolyse élémentaires de type à oxydes solides (SOEC) dont les cathodes sont en matériau(x) catalyseur(s) de réaction de méthanation,
le procédé comprenant les étapes suivantes, lorsque l'on souhaite réaliser une montée en température des N réacteurs ou d'une fraction de ceux-ci, ou lorsque le niveau d'électricité disponible est insuffisant pour mettre en œuvre une électrolyse EHT ou une co-électrolyse de H₂O et CO₂ au sein de la totalité des N réacteurs:
a/ on alimente électriquement et si besoin thermiquement un nombre P de réacteurs et, on alimente et on distribue aux cathodes des P réacteurs soit de la vapeur d'eau H₂O, soit un mélange de vapeur d'eau et de dioxyde de carbone CO₂, de sorte à réaliser à chaque cathode des P réacteurs soit une électrolyse à hautes températures de la
   vapeur d'eau H₂O, soit une co-électrolyse à hautes températures de vapeur d'eau et de dioxyde de carbone,
b/ on récupère au moins une partie des gaz issus de l'électrolyse (hydrogène H2, vapeur d'eau H₂O) ou de la co-électrolyse (H2, vapeur d'eau, monoxyde de carbone CO, dioxyde de carbone CO₂, méthane CH₄) avec laquelle on alimente et on distribue à chaque cathode d'un nombre X de réacteurs non alimentés électriquement, le nombre X étant inférieur ou égal à N-P, de sorte à réaliser à chaque cathode des X réacteurs une méthanation par catalyse hétérogène.

L'invention consiste ainsi en une gestion thermique de l'ensemble des réacteurs SOEC d'une unité Power-to-Gas, qui prévoit qu'en cas de niveau d'alimentation électrique insuffisant pour pouvoir faire fonctionner en mode nominal tous les réacteurs, c'est-à-dire en mode d'électrolyse/co-électrolyse, typiquement à 800°C, on en fait fonctionner seulement qu'une partie dans ce mode, soit P réacteurs l'autre partie des réacteurs, soit X réacteurs, qui n'est pas alimentée électriquement étant monté ou maintenue à une température proche et inférieure tout en restant dans le domaine des haute températures, typiquement au-dessus de 600°C ou à une température compatible avec les contraintes de cyclage thermique des composants, par réaction de méthanation interne en leur sein à partir de l'injection des produits gazeux issus des réactions d'électrolyse/de co-électrolyse dans les P réacteurs, et ce malgré les déperditions thermiques.

Selon un mode de réalisation avantageux, le procédé comprend une étape d'émission du dioxyde de carbone par une source de production, le dioxyde de carbone alors émis alimente les réacteurs P et/ou X lors de l'étape a/ et/ou lors de l'étape b/.

Avantageusement, en mode stand-by ou démarrage, les besoins de chaleur de l'unité sont apportés par la chaleur fatale d'une source de production, qui est de préférence la même source de production que celle qui émet le dioxyde de carbone.

Par « source de production » qui émet du dioxyde de carbone CO₂ et/ou une chaleur fatale, on entend ici et dans le cadre de l'invention, tout site de production, comme les sites de production d'énergie (les centrales nucléaires pour la chaleur fatale, les centrales thermiques de méthanisation ou de gazéification de biomasse pour la chaleur fatale et/ou d'émission de CO₂), de sites de production industrielle (cimenteries, industries sidérurgiques pour la chaleur fatale et/ou d'émission de CO₂), de bâtiments tertiaires d'autant plus émetteurs de chaleur qu'ils en sont fortement consommateurs comme les hôpitaux, de réseaux de transport en lieu fermé, ou encore de sites d'élimination comme les unités de traitement thermique de déchets....

Ainsi, le maintien à haute température, typiquement entre 600 et 800°C, de l'ensemble des réacteurs SOEC de l'unité Power-to-Gas en mode stand-by, est rendu possible, malgré les pertes thermiques intrinsèques, par la valorisation d'une chaleur externe à moyenne température, typiquement entre 200 et 300°C, de préférence une chaleur fatale/excédentaire, de préférence encore liée à une source d'émission de CO₂.

Une fois, passés dans les X réacteurs SOEC non-alimentés électriquement, les gaz produits peuvent être introduits dans les réacteurs dédiés de méthanation de l'unité Power-to-Gas, afin de finaliser la production de méthane de synthèse.

Ainsi, selon un mode de réalisation avantageux, le procédé comprend une étape c/ selon lequel les gaz produits par méthanation dans les réacteurs SOEC au cours de l'étape b/ sont introduits dans les réacteurs dédiés de méthanation de l'unité Power-to-Gas.

De préférence, l'étape a/ est réalisée à des températures comprises entre 600°C et 1000°C.

De préférence encore, l'étape b/ est réalisée à des températures comprises entre 400°C et 800°C ou à une température compatible avec les contraintes de cyclage thermique des composants, et inférieures d'au moins 100 °C à la température de l'étape a/.

Avantageusement, les étapes a/ et b/ sont réalisées à des pressions comprises entre 0 et 100 bars, de préférence comprise entre 4 et 80 bars.

Les N réacteurs sont de préférence tous des réacteurs à empilement de cellules d'électrolyse élémentaires de type SOEC formées chacune d'une cathode, d'une anode et d'un électrolyte intercalé entre la cathode et l'anode, et une pluralité d'interconnecteurs électrique et fluidique agencés chacun entre deux cellules élémentaires adjacentes avec une de ses faces en contact électrique avec l'anode d'une des deux cellules élémentaires et l'autre de ses faces en contact électrique avec la cathode de l'autre des deux cellules élémentaires.

On précise ici que, les dispositifs d'interconnexion, électrique et fluidique, aussi appelés interconnecteurs ou encore plaques d'interconnexion, sont les dispositifs qui assurent la connexion en série d'un point de vue électrique de chaque cellule d'électrolyse dans l'empilement des réacteurs EHT et en parallèle d'un point de vue fluidique, combinant ainsi la production de chacune des cellules. Les interconnecteurs assurent ainsi les fonctions d'amenée et de collecte de courant et délimitent des compartiments de circulation (distribution et/ou la collecte) des gaz.

Les cellules d'électrolyse sont avantageusement de type à cathode support. Par «cellule à cathode support », on entend ici et dans le cadre de l'invention la définition déjà donnée dans le domaine de l'électrolyse de l'eau à haute température EHT et désignée sous l'acronyme anglais CSC pour « *Cathode-supported Cell* », c'est-à-dire une cellule dans laquelle l'électrolyte et l'électrode à oxygène (anode) sont disposées sur l'électrode à hydrogène ou à monoxyde de carbone (cathode) plus épaisse qui sert donc de support.

Les cathodes sont de préférence à base de nickel (Ni) supporté par de la zircone (ZrO₂), de préférence stabilisée à l'oxyde d'yttrium (Y₂O₃) ou à base de Ni supportée par de la cérine, telle que la cérine gadoliniée (Ni-CGO).

Pour l'étape a/, on peut avantageusement réaliser la co-électrolyse de vapeur d'eau et du dioxyde de carbone dans le réacteur à empilement selon l'enseignement du brevet EP2931943B1: on alimente et on distribue à chaque cathode des P réacteurs soit de la vapeur d'eau H2O, soit un mélange de vapeur d'eau et de dioxyde de carbone CO2, ou on alimente et on distribue de la vapeur d'eau à chaque cathode d'une des deux cellules élémentaires adjacentes des P réacteurs et on alimente et on distribue du dioxyde de carbone à la cathode de l'autre des deux cellules élémentaires des P réacteurs, de sorte à réaliser à chaque cathode des P réacteurs soit une électrolyse à hautes températures de la vapeur d'eau H2O, soit une co-électrolyse à hautes températures de vapeur d'eau et de dioxyde de carbone.

L'invention a également pour objet un procédé de production de méthane CH₄ à partir d'une source d'énergie dite intermittente, mettant en œuvre le procédé de fonctionnement en stand-by d'une unité Power-to-Gas décrit précédemment, l'étape b/ étant mise en œuvre lorsque ladite source intermittente n'est plus apte à produire le niveau d'électricité suffisant pour tous les N réacteurs.

L'invention qui vient d'être décrite présente de nombreux avantages parmi lesquels on peut citer :
maintien à haute température, typiquement entre 600 et 800°C, de l'ensemble de l'unité, malgré un fonctionnement à charge qui peut être très partielle dans un contexte d'intermittence de l'électricité en surplus;
- pas de consommation de combustible pour ce maintien à haute température, et pas de nécessité de basculer en mode pile à combustible SOFC pour le faire;
- maintien du rendement électrique de l'unité, durant le fonctionnement à charge partiel, dans le cas de la disponibilité d'une source de chaleur fatale/excédentaire à moyenne température avantageusement liée à une source industrielle de production de CO_{2;}
- maintien d'une atmosphère réductrice (H₂/CO/H₂O/CO₂) en balayage des X réacteurs SOEC en mode stand-by, ce qui limite les risques d'oxydation et le besoin d'inertage ou de balayage avec un autre gaz réducteur, par exemple avec de l'hydrogène;
- possibilité d'utiliser le mode de stand-by selon l'invention pour monter en température des réacteurs SOEC de l'unité, initialement froids. Ainsi, suite à un préchauffage à moyenne température, typiquement aux environs de 300°C, par exemple en lien avec la source de chaleur extérieure, l'introduction des réactifs issus d'un électrolyseur/co-électrolyseur alimenté électriquement permet une montée en température progressive par méthanation des autres X réacteurs, ce qui génère donc des économies sur les équipements spécifiques de démarrage et rend possible un démarrage électrochimique rapide;
- facilité de conduite de la température de stand-by, typiquement aux environs de 600 à 700°C, par pilotage des débits de réactifs injectés dans chacun des X réacteurs SOEC inactifs, c'est-à-dire non alimentés électriquement.

### Description détaillée

D'autres avantages et caractéristiques de l'invention ressortiront mieux à la lecture de la description détaillée d'exemples de mise en œuvre de l'invention faite à titre illustratif et non limitatif en référence aux figures suivantes parmi lesquelles :
- la figure 1 est une vue schématique montrant le principe de fonctionnement d'un électrolyseur d'eau à haute température,
- la figure 2 est une vue schématique en éclaté d'une partie d'un électrolyseur de vapeur d'eau à haute température comprenant des interconnecteurs,
- la figure 3 est une vue schématique du fonctionnement en mode stand-by selon l'invention d'une unité Power-to-Gas ;
- la figure 4 illustre sous forme de courbes l'évolution du taux de conversion en méthane avec l'abaissement de la température au sein d'un réacteur non actif de l'unité, pour un mélange de H2, CO, CO2 et H2O typique de sortie d'une réacteur actif de coélectrolyse de l'unité ;
- la figure 5 représente la grande courbe composite, c'est-à-dire la variation des quantités de chaleur échangée dans chaque intervalle de température ainsi que les énergies à fournir par les utilités, ou la valorisation d'une énergie thermique d'apport extérieur, d'un exemple d'unité Power-to-Gas, en mode de fonctionnement nominal;
- la figure 6 représenté la grande courbe composite du même exemple d'unité que selon la figure 5 mais en mode stand-by selon l'invention.

Dans l'ensemble de la présente demande, les termes « entrée », « sortie » « aval » et « amont » sont à comprendre en référence au sens de circulation des gaz depuis leur entrée dans le réacteur SOEC jusqu'à leur sortie de celle-ci.

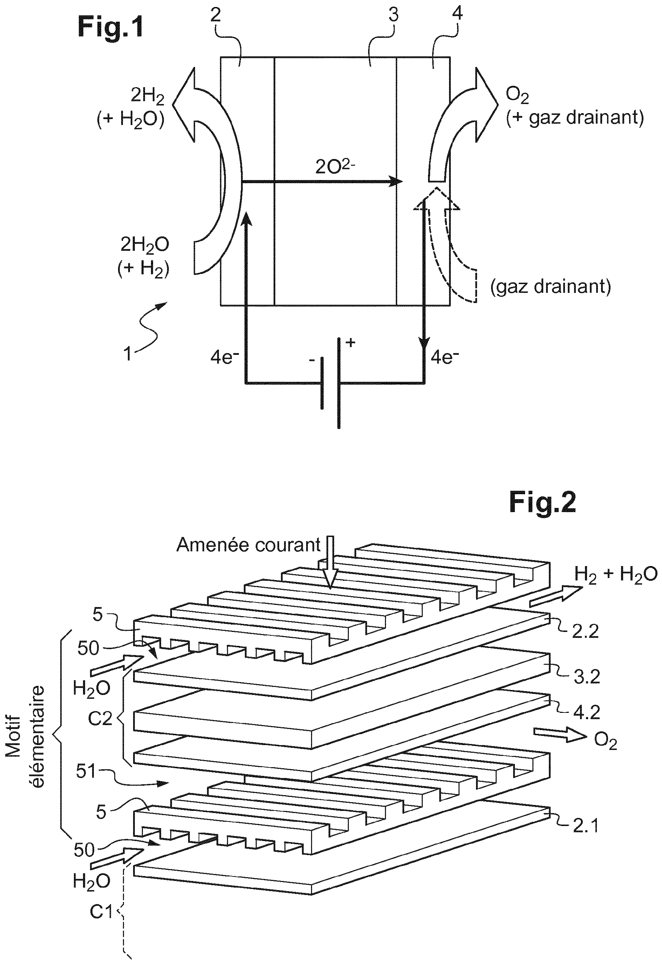

On précise que sur les figures 1 et 2, les symboles et les flèches d'alimentation de vapeur d'eau H₂O, de distribution et de récupération de dihydrogène H₂ et d'oxygène O₂, et du courant, de dioxyde de carbone CO₂, de distribution et de récupération de monoxyde de carbone CO et d'oxygène O₂ et du courant, et du méthane CH₄ sont montrés à des fins de clarté et de précision, pour illustrer le fonctionnement d'un réacteur 1 SOEC selon l'invention.

On précise également que tous les réacteurs fonctionnant selon les étapes a/ et b/ du procédé selon l'invention décrits sont de type à oxydes solides (SOEC, acronyme anglais de « *Solid Oxyde Electrolyte Cell* ») fonctionnant à haute température. Ainsi, tous les constituants (anode/électrolyte/cathode) d'une cellule d'électrolyse sont des céramiques.

De tels constituants peuvent être ceux d'une pile à combustible SOFC. La haute température de fonctionnement en mode nominal du réacteur 1 lors de l'électrolyse ou de la co-électrolyse est typiquement comprise entre 600°C et 1000°C.

Typiquement, les caractéristiques d'une cellule d'électrolyse élémentaire SOEC convenant à l'invention, du type cathode support (CSC), peuvent être celles indiquées comme suit dans le tableau 2 ci-dessous.

**TABLEAU 2**

| **Cellule d'électrolyse** | **Unité** | **Valeur** |
|---|---|---|
| **Cathode 2** | | |
| Matériau constitutif | | Ni-YSZ |
| Epaisseur | µm | 315 |
| Conductivité thermique | W m⁻¹ K⁻¹ | 13,1 |
| Conductivité électrique | Ω⁻¹ m⁻¹ | 10⁵ |
| Porosité | | 0,37 |
| Perméabilité | m² | 10⁻¹³ |
| Tortuosité | | 4 |
| Densité de courant | A.m⁻² | 5300 |

| **Anode 4** | | |
|---|---|---|
| Matériau constitutif | | LSM |
| Epaisseur | µm | 20 |
| Conductivité thermique | W m⁻¹ K⁻¹ | 9,6 |
| Conductivité électrique | Ω⁻¹ m⁻¹ | 1 10⁴ |
| Porosité | | 0,37 |
| Perméabilité | m² | 10⁻¹³ |
| Tortuosité | | 4 |
| Densité de courant | A.m⁻² | 2000 |

| **Electrolyte 3** | | |
|---|---|---|
| Matériau constitutif | | YSZ |
| Epaisseur | µm | 5 |
| Résistivité | Ω m | 0,42 |

Un électrolyseur d'eau est un dispositif électrochimique de production d'hydrogène (et d'oxygène) sous l'effet d'un courant électrique.

Dans les électrolyseurs à haute température EHT, l'électrolyse de l'eau à haute température est réalisée à partir de vapeur d'eau. La fonction d'un électrolyseur haute température EHT est de transformer la vapeur d'eau en hydrogène et en oxygène selon la réaction suivante:

2H₂O → 2H₂ + O₂.

Cette réaction est réalisée par voie électrochimique dans les cellules de l'électrolyseur. Comme schématisée en figure 1, chaque cellule d'électrolyse élémentaire 1 est formée d'une cathode 2 et d'une anode 4, placées de part et d'autre d'un électrolyte solide 3. Les deux électrodes (cathode et anode) 2, 4 sont des conducteurs électroniques, en matériau poreux, et l'électrolyte 3 est étanche au gaz, isolant électronique et conducteur ionique. L'électrolyte peut être en particulier un conducteur anionique, plus précisément un conducteur anionique des ions O²⁻ et l'électrolyseur est alors dénommé électrolyseur anionique.

Les réactions électrochimiques se font à l'interface entre chacun des conducteurs électroniques et le conducteur ionique.

A la cathode 2, la demi-réaction est la suivante :

2 H₂O + 4 e⁻ → 2 H₂ + 2 O²⁻.

A l'anode 4, la demi-réaction est la suivante:

2 O²⁻ → O₂+ 4 e⁻.

L'électrolyte 3 intercalé entre les deux électrodes 2, 4 est le lieu de migration des ions O^{2-,} sous l'effet du champ électrique créé par la différence de potentiel imposée entre l'anode 4 et la cathode 2.

Comme illustré entre parenthèses en figure 1, la vapeur d'eau en entrée de cathode peut être accompagnée d'hydrogène H₂ et l'hydrogène produit et récupéré en sortie peut être accompagné de vapeur d'eau. De même, comme illustré en pointillés, un gaz drainant, tel que l'air peut en outre être injecté en entrée pour évacuer l'oxygène produit. L'injection d'un gaz drainant a pour fonction supplémentaire de jouer le rôle de régulateur thermique.

Un réacteur d'électrolyse élémentaire est constitué d'une cellule élémentaire telle que décrite ci-dessus, avec une cathode 2, un électrolyte 3, et une anode 4 et de deux connecteurs mono-polaires qui assurent les fonctions de distribution électrique, hydraulique et thermique.

Pour augmenter les débits d'hydrogène et d'oxygène produits, il est connu d'empiler plusieurs cellules d'électrolyse élémentaires les unes sur les autres en les séparant par des dispositifs d'interconnexion, usuellement appelés interconnecteurs ou plaques d'interconnexion bipolaires. L'ensemble est positionné entre deux plaques d'interconnexion d'extrémité qui supportent les alimentations électriques et des alimentations en gaz de l'électrolyseur (réacteur d'électrolyse).

Un électrolyseur de l'eau à haute température (EHT) comprend ainsi au moins une, généralement une pluralité de cellules d'électrolyse empilées les uns sur les autres, chaque cellule élémentaire étant formée d'un électrolyte, d'une cathode et d'une anode, l'électrolyte étant intercalé entre l'anode et la cathode.

Les dispositifs d'interconnexion fluidique et électrique qui sont en contact électrique avec une ou des électrodes assurent en général les fonctions d'amenée et de collecte de courant électrique et délimitent un ou des compartiments de circulation des gaz.

Ainsi, un compartiment dit cathodique a pour fonction la distribution du courant électrique et de la vapeur d'eau ainsi que la récupération de l'hydrogène à la cathode en contact.

Un compartiment dit anodique a pour fonction la distribution du courant électrique ainsi que la récupération de l'oxygène produit à l'anode en contact, éventuellement à l'aide d'un gaz drainant.

La figure 2 représente une vue éclatée de motifs élémentaires d'un électrolyseur de vapeur d'eau à haute température selon l'état de l'art. Cet électrolyseur EHT comporte une pluralité de cellules d'électrolyse élémentaires Cl, C2, de type à oxyde solide (SOEC) empilées alternativement avec des interconnecteurs 5. Chaque cellule Cl, C2... est constituée d'une cathode 2.1, 2.2,... et d'une anode 4.1, 4.2, entre lesquelles est disposé un électrolyte 3.1, 3.2....

L'interconnecteur 5 est un composant en alliage métallique qui assure la séparation entre les compartiments cathodique 50 et anodique 51, définis par les volumes compris entre l'interconnecteur 5 et l'anode adjacente 4.2 et entre l'interconnecteur 5 et la cathode adjacente 2.1 respectivement. Il assure également la distribution des gaz aux cellules. L'injection de vapeur d'eau dans chaque motif élémentaire se fait dans le compartiment cathodique 50. Le collectage de l'hydrogène produit et de la vapeur d'eau résiduelle à la cathode 2.1, 2.2 ... est effectué dans le compartiment cathodique 50 en aval de la cellule C1, C2... après dissociation de la vapeur d'eau par celle-ci. Le collectage de l'oxygène produit à l'anode 4.2 est effectué dans le compartiment anodique 51 en aval de la cellule Cl, C2... après dissociation de la vapeur d'eau par celle-ci.

L'interconnecteur 5 assure le passage du courant entre les cellules C1 et C2 par contact direct avec les électrodes adjacentes, c'est-à-dire entre l'anode 4.2 et la cathode 2.1.

Dans les co-électrolyseurs à haute température EHT, la co-électrolyse à haute température est réalisée à partir de vapeur d'eau et de dioxyde de carbone CO₂. La fonction d'un co-électrolyseur haute température SOEC est de transformer la vapeur d'eau et le CO₂ en hydrogène, monoxyde de carbone et en oxygène selon la réaction suivante:

CO₂ + H₂O → CO + H₂ + O₂.

Un co-électrolyseur 1 peut comporter exactement les mêmes constituants à oxydes solides (SOEC) qu'un électrolyseur EHT qui vient d'être décrit. Usuellement, la vapeur d'eau et le dioxyde de carbone CO₂ sont mélangés, dans des ratios choisis en fonction de l'application, avant l'entrée dans le co-électrolyseur et injectés simultanément dans chaque compartiment cathodique 50.

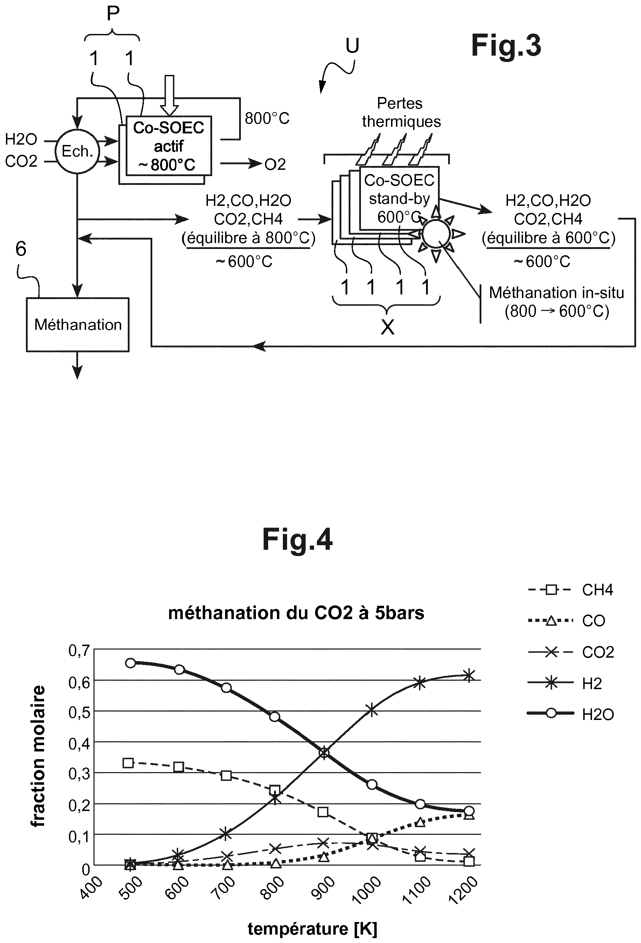

On a représenté en figure 3, une unité Power-to-Gas U mettant en œuvre un grand nombre X et P de réacteurs de co-électrolyse en amont d'une pluralité de réacteurs de méthanation dédiés 6.

Cette figure 3 illustre un exemple du procédé de fonctionnement de cette unité U en mode stand-by selon l'invention : ici, un nombre P de réacteurs 1 est alimenté électriquement et fonctionne en co-électrolyse, tandis que les X réacteurs restants, non alimentés électriquement sont alimentés par une part des produits gazeux issus de la co-électrolyse des P réacteur.

L'exemple donné correspond à une unité Power-to-Gas de puissance de 20MWe de co-électrolyse en fonctionnement nominal, qui est couplée à une source industrielle, typiquement une industrie sidérurgique qui émet du CO₂ et une chaleur de température moyenne aux environs de 200°C.

Pour cette puissance 20MWe de co-électrolyse et dans les conditions opératoires choisies d'un réacteur SOEC, c'est-à-dire avec un fonctionnement au thermo-neutre à une tension de 1,33V, une densité courant de 1,1A/cm2, et sous pression de 10bars, l'unité Power-to-Gas U comprend un nombre N égal à 1855 réacteurs SOEC 1, ce qui correspond à un empilement de 50 cellules Cl, C2...de 196cm² chacune.

Ce nombre N de 1855 réacteurs est regroupé en 53 enceintes de 35 réacteurs chacune.

Le fonctionnement nominal, c'est-à-dire avec une charge de 100%, de l'unité Power-to-Gas comprend les étapes suivantes :
- une étape de co-électrolyse de 20MWe, par l'ensemble des 1855 réacteurs SOEC fonctionnant en parallèle, alimentés en vapeur d'eau et en dioxyde de carbone CO₂, issu d'une capture en amont à la sortie de la source industrielle, à haute température (800°C) et produisant un mélange d'H₂, CO, H₂O et CO₂ ;
- une étape de condensation partielle de la vapeur d'eau en sortie des réacteurs de co-électrolyse ;
- un passage dans un ou plusieurs (en parallèle) premiers réacteusr de méthanation catalytique dédié 6 ;
- après une étape de condensation intermédiaire de la vapeur d'eau, le passage dans un ou plusieurs (en parallèle) second réacteurs de méthanation catalytique dédié 6, qui finalise la réaction de méthanation du H2, CO et CO2 pour en faire du méthane CH₄
- une étape de condensation plus poussée de l'eau pour obtenir un méthane de synthèse aux spécifications d'injection pour le réseau de Gaz Naturel.

En outre, en fonctionnement nominal, l'unité Power-to-Gas U présente une intégration thermique selon laquelle la chaleur issue des réacteurs de méthanation 6 est en particulier pleinement utilisée pour vaporiser l'eau en entrée des réacteurs 1 de co-électrolyse.

L'approvisionnement électrique de l'unité U est assuré par un surplus de production d'électricité issue d'énergies renouvelables. Ce surplus a été estimé à 1800h/an à un horizon de 10 ans.

Si l'on fait l'hypothèse d'un fonctionnement nominal de l'unité uniquement durant des heures de surplus, de longues périodes de stand-by sont donc à prévoir durant l'année, durant lesquelles les besoins électrique sont fournis par un achat sur le réseau électrique.

Le fonctionnement en mode stand-by selon l'invention, comme illustré en figure 3, consiste à réaliser les étapes suivantes :
a/ on alimente électriquement un nombre P de réacteurs de l'unité U et, on alimente et on distribue aux cathodes des P réacteurs soit de la vapeur d'eau H₂O, soit un mélange de vapeur d'eau et de dioxyde de carbone CO₂, de sorte à réaliser à chaque cathode des P réacteurs soit une électrolyse à hautes températures de la vapeur d'eau H₂O, soit une co-électrolyse à hautes températures de vapeur d'eau et de dioxyde de carbone,
b/ on récupère au moins une partie des gaz issus de l'électrolyse (hydrogène H₂, vapeur d'eau H₂O) ou de la co-électrolyse (H2, vapeur d'eau, monoxyde de carbone CO, dioxyde de carbone CO₂, méthane CH₄) avec laquelle on alimente et on distribue à chaque cathode d'un nombre X de réacteurs non alimentés électriquement de l'unité U, le nombre X étant inférieur ou égal à N-P, de sorte à réaliser à chaque cathode des X réacteurs une méthanation par catalyse hétérogène.

En appliquant les étapes selon l'invention, une stratégie de gestion thermique en mode Stand-by a été mise en œuvre comme suit:
- évaluation des déperditions thermiques à 4,64kWth par enceinte contenant 35 réacteurs en stand-by;
- les produits issus des P réacteurs sont injectés dans les autres X réacteurs SOEC, pour permettre une méthanation interne selon les réactions exothermiques suivantes, favorisées d'un point de vue thermodynamique par un abaissement de la température :

   *CO*₂ + 4*H*₂ → *CH*₄ + 2*H*₂*O*.

   *CO* + 3*H*₂ → *CH*₄ + *H*₂*O.*

Un exemple d'évolution de production de méthane sous 5 bars de pression est montré en figure 4 ;
- un calcul thermodynamique de déplacement de l'équilibre réactionnel de méthanation entre les P réacteurs actifs (800°C) et les X inactifs (600°C) a montré qu'un réacteur actif de co-électrolyse à 800°C sous pression de 10bars permet de maintenir en température un nombre de sept réacteurs SOEC à 600°C sans alimentation électrique, soit un fonctionnement de l'unité U à seulement 12,5% de charge.

Cette stratégie de fonctionnement en stand-by selon l'invention permet donc bien de maintenir à haute température l'ensemble des N réacteurs SOEC, moyennant une consommation électrique de seulement 12,5% du fonctionnement nominal, soit P=12,5% du nombre N avec X=N-P.

Comme montré en figure 3, une fois utilisés pour le maintien au chaud des X réacteurs SOEC inactifs, les réactifs finalisent leur méthanation dans les réacteurs de méthanation 6 dédiés, comme pour le fonctionnement nominal.

L'unité Power-to-Gas U selon l'invention continue donc à mettre en œuvre la valorisation de l'électricité en méthane de synthèse, mais à charge réduite.

Les inventeurs ont réalisé une intégration thermique d'une unité U, grâce au logiciel de modélisation commercial « ProSimPlus », afin de réaliser un bilan thermique global dans les deux modes de fonctionnement, à savoir le fonctionnement nominal et celui en mode stand-by selon l'invention.

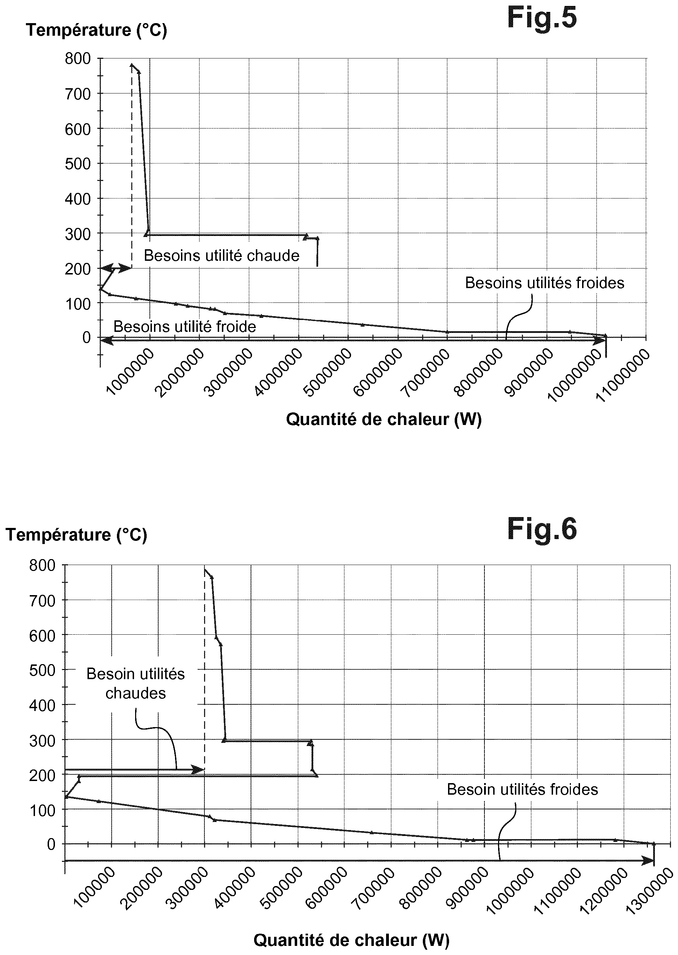

Ce bilan est illustré respectivement en figure 5 (mode de fonctionnement nominal) et en figure 6 (mode stand-by selon l'invention). On précise que selon leurs définitions usuelles, les utilités froides sont les fluides de refroidissement utilisés pour évacuer l'excédent de chaleur de l'unité typiquement à basse température, tandis que les utilités chaudes sont les compléments de chauffage utilisés pour satisfaire le besoin de chaleur de l'unité typiquement à moyenne ou haute température.

Des courbes illustrées en figures 5 et 6, le bilan thermique montre :
- des besoins d'utilités froides pour l'unité, qui sont par hypothèse fournies au travers de consommations électriques, par exemple d'aéro-réfrigérant ou de pompe à chaleur ;
- des besoins d'utilités chaudes, qui sont cependant limités à une température proche de ~200°C :
   - pour le fonctionnement en mode nominal, ce qui est normal ;
   - également pour le fonctionnement en stand-by, grâce à la stratégie thermique déployée, et ce malgré le maintien à haute température et les déperditions thermiques sur les X réacteurs SOEC non-alimentés électriquement.

Si on couple l'unité avec une source industrielle qui émet à la fois du CO2 et une chaleur fatale/excédentaire à moyenne température, ce besoin d'utilités chaudes à moyenne température n'a pas à être comptabilisé dans le bilan électrique de l'unité.

Les résultats du calcul thermique par le logiciel par ProSimPlus, ainsi que du rendement électrique d'une unité Power-to-Gas sont illustrés dans le tableau 1 ci-dessous, pour les modes de fonctionnement nominal et en stand-by conforme à l'invention avec une charge de 12,5% du nominal.

**TABLEAU 1**

| Mode de fonctionnement | Nominal | Stand-by selon l'invention |
|---|---|---|
| Electricité (MW) dont utilités froides | 24,59 | 3,07 |
| Consommation eau (t/h) | 2,56 | 0,32 |
| Production de méthane CH₄ (t/h) | 1,11 | 0,14 |
| Production d'oxygène (t/h) | 4,49 | 0,56 |
| Rendement (%) | 69,1 | 69,1 |

De ce tableau 1, il ressort que le rendement électrique de l'unité U est maintenu à charge partielle, malgré les besoins thermiques de maintien des X réacteurs à haute température non alimentés électriquement.

L'invention n'est pas limitée aux exemples qui viennent d'être décrits ; on peut notamment combiner entre elles des caractéristiques des exemples illustrés au sein de variantes non illustrées.

### REFERENCES CITEES

[1]: *"*Etude portant sur l'hydrogène et la méthanation comme procédé de vcalorisation de l'électricité excédentaire" - ADEME, GRTgaz, GrDF ; Septembre 2014;
[2]: "Sensitivities of Power-to-Gas within an optimized Energy System"; E. Kotter; IRES-2015
[3]: "Energy Storage for a Greenhouse Gas Neutral Society : Demand and Long-term Strategy"; M. Nowakowski ; IRES-2015

## Revendications

1. Procédé de fonctionnement en mode de démarrage ou en mode stand-by d'une unité, dite power-to-gas, comprenant un nombre N de réacteurs (1) à empilement de cellules d'électrolyse élémentaires de type à oxydes solides dont les cathodes sont en matériau(x) catalyseur(s) de réaction de méthanation,
le procédé comprenant les étapes suivantes, lorsque l'on souhaite réaliser une montée en température des N réacteurs ou d'une fraction de ceux-ci, ou lorsque le niveau d'électricité disponible est insuffisant pour mettre en œuvre une électrolyse à hautes températures ou une co-électrolyse de H₂O et CO₂ au sein de la totalité des N réacteurs:
a/ on alimente électriquement et si besoin thermiquement un nombre P de réacteurs et, on alimente et on distribue aux cathodes des P réacteurs soit de la vapeur d'eau H₂O, soit un mélange de vapeur d'eau et de dioxyde de carbone CO₂, de sorte à réaliser à chaque cathode des P réacteurs soit une électrolyse à hautes températures de la vapeur d'eau H₂O, soit une co-électrolyse à hautes températures de vapeur d'eau et de dioxyde de carbone,
b/ on récupère au moins une partie des gaz issus de l'électrolyse ou de la co-électrolyse avec laquelle on alimente et on distribue à chaque cathode d'un nombre X de réacteurs non alimentés électriquement, le nombre X étant inférieur ou égal à N-P, de sorte à réaliser à chaque cathode des X réacteurs une méthanation par catalyse hétérogène.

2. Procédé de fonctionnement selon la revendication 1, le procédé comprenant une étape d'émission du dioxyde de carbone par une source de production, d'un site de production, notamment choisi parmi les sites de production d'énergie, tels que les centrales nucléaires pour la chaleur fatale, les centrales thermiques de méthanisation ou de gazéification de biomasse pour la chaleur fatale et/ou d'émission de CO2, les sites de production industrielle, tels que les cimenteries, les industries sidérurgiques pour la chaleur fatale et/ou d'émission de CO2, les bâtiments tertiaires comme les hôpitaux, de réseaux de transport en lieu fermé, ou encore les sites d'élimination comme les unités de traitement thermique de déchets.

3. Procédé de fonctionnement selon la revendication 1 ou 2, selon lequel, en mode stand-by ou démarrage, les besoins de chaleur de l'unité, dont les réacteurs SOEC, sont apportés par la chaleur fatale d'une source de production, d'un site de production, notamment choisi parmi les sites de production d'énergie, tels que les centrales nucléaires pour la chaleur fatale, les centrales thermiques de méthanisation ou de gazéification de biomasse pour la chaleur fatale et/ou d'émission de CO2, les sites de production industrielle, tels que les cimenteries, les industries sidérurgiques pour la chaleur fatale et/ou d'émission de CO2, les bâtiments tertiaires comme les hôpitaux, de réseaux de transport en lieu fermé, ou encore les sites d'élimination comme les unités de traitement thermique de déchets..

4. Procédé de fonctionnement selon l'une des revendications précédentes, comprenant une étape c/ selon lequel les gaz produits par méthanation dans les réacteurs SOEC au cours de l'étape b/ sont introduits dans les réacteurs (6) dédiés de méthanation de l'unité Power-to-Gas.

5. Procédé de fonctionnement selon l'une des revendications précédentes, l'étape a/ étant réalisée à des températures comprises entre 600°C et 1000°C.

6. Procédé de fonctionnement selon l'une des revendications précédentes, l'étape b/ étant réalisée à des températures comprises entre 400°C et 800°C, et inférieures d'au moins 100 °C à la température de l'étape a/.

7. Procédé de fonctionnement selon l'une des revendications précédentes, les étapes a/ et b/ étant réalisées à des pressions comprises entre 0 et 100 bars, de préférence comprise entre 4 et 80 bars.

8. Procédé de fonctionnement selon l'une des revendications précédentes, les N réacteurs étant tous des réacteurs à empilement de cellules d'électrolyse élémentaires de type SOEC formées chacune d'une cathode, d'une anode et d'un électrolyte intercalé entre la cathode et l'anode, et une pluralité d'interconnecteurs électrique et fluidique agencés chacun entre deux cellules élémentaires adjacentes avec une de ses faces en contact électrique avec l'anode d'une des deux cellules élémentaires et l'autre de ses faces en contact électrique avec la cathode de l'autre des deux cellules élémentaires.

9. Procédé de fonctionnement selon la revendication 8, selon lequel on réalise l'étape a/ en alimentant et en distribuant à chaque cathode des P réacteurs soit de la vapeur d'eau H₂O, soit un mélange de vapeur d'eau et de dioxyde de carbone CO₂, ou en alimentant et en distribuant de la vapeur d'eau à chaque cathode d'une des deux cellules élémentaires adjacentes des P réacteurs et on alimente et on distribue du dioxyde de carbone à la cathode de l'autre des deux cellules élémentaires des P réacteurs, de sorte à réaliser à chaque cathode des P réacteurs soit une électrolyse à hautes températures de la vapeur d'eau H₂O, soit une co-électrolyse à hautes températures de vapeur d'eau et de dioxyde de carbone,

10. Procédé de production de méthane CH₄ à partir d'une source d'énergie dite intermittente, mettant en œuvre le procédé de fonctionnement en stand-by d'une unité Power-to-Gas selon l'une des revendications 1 à 9, l'étape b/ étant mise en œuvre lorsque ladite source intermittente n'est plus apte à produire le niveau d'électricité suffisant pour tous les N réacteurs.

## Patentansprüche

1. Betriebsverfahren im Einschalt- oder Standby-Modus einer Power-to-Gas-Einheit, die eine Anzahl N von Reaktoren (1) mit einem Stapel elementarer Elektrolysezellen vom Festoxidtyp umfasst, deren Kathoden aus Methanisierungsreaktions-Katalysatormaterial(ien) sind,
wobei das Verfahren die folgenden Schritte umfasst, wenn ein Temperaturanstieg der N Reaktoren oder eines Anteils dieser erreicht werden soll, oder wenn der verfügbare Elektrizitätspegel nicht ausreichend ist, um eine Hochtemperatur-Elektrolyse oder eine Co-Elektrolyse von H₂O und CO₂ innerhalb der Gesamtheit der N Reaktoren durchzuführen:
a) es wird eine Anzahl P von Reaktoren elektrisch und bei Bedarf thermisch gespeist, und es wird den Kathoden der P Reaktoren entweder Wasserdampf H₂O oder ein Gemisch aus Wasserdampf und Kohlendioxid CO₂ zugeführt und an diese verteilt, um an jeder Kathode der P Reaktoren entweder eine Hochtemperatur-Elektrolyse des Wasserdampfs H₂O oder eine Hochtemperatur-Co-Elektrolyse von Wasserdampf und Kohlendioxid durchzuführen,
b) es wird wenigstens ein Teil der Gase aus der Elektrolyse oder der Co-Elektrolyse zurückgewonnen, der jeder Kathode einer Anzahl X von Reaktoren, die nicht elektrisch gespeist werden, zugeführt und an diese verteilt wird, wobei die Anzahl X kleiner als oder gleich N-P ist, um an jeder Kathode der X Reaktoren eine Methanisierung durch heterogene Katalyse durchzuführen.

2. Betriebsverfahren nach Anspruch 1, wobei das Verfahren einen Schritt des Emittierens des Kohlendioxids von einer Produktionsquelle einer Produktionsstätte umfasst, die insbesondere aus Energieerzeugungsstätten wie Atomkraftwerke für Abwärme, Wärmekraftwerke zur Biomasse-Methanisierung oder -Vergasung für Abwärme und/oder Emission von CO₂, Industrieproduktionsstätten wie Zementwerke, Stahlindustrien für Abwärme und/oder Emission von CO₂, Tertiärgebäuden wie Krankenhäuser, Transportnetzen an geschlossenen Orten oder auch Entsorgungsstätten wie Wärmebehandlungseinheiten für Abfälle gewählt ist.

3. Betriebsverfahren nach Anspruch 1 oder 2, wobei im Standby- oder Einschaltmodus die Wärmebedarfe der Einheit, darunter SOEC-Reaktoren, durch die Abwärme einer Produktionsquelle einer Produktionsstätte zugeführt werden, die insbesondere aus Energieerzeugungsstätten wie Atomkraftwerke für Abwärme, Wärmekraftwerke zur Biomasse-Methanisierung oder -Vergasung für Abwärme und/oder Emission von CO_{2,}, Industrieproduktionsstätten wie Zementwerke, Stahlindustrien für Abwärme und/oder Emission von CO₂, Tertiärgebäuden wie Krankenhäuser, Transportnetzen an geschlossenen Orten oder auch Entsorgungsstätten wie Wärmebehandlungseinheiten für Abfälle gewählt ist.

4. Betriebsverfahren nach einem der vorhergehenden Ansprüche, umfassend einen Schritt c), wobei die Gase, die durch Methanisierung in den SOEC-Reaktoren im Verlauf des Schritts b) erzeugt werden, in die dedizierten Methanisierungsreaktoren (6) der Power-to-Gas-Einheit eingebracht werden.

5. Betriebsverfahren nach einem der vorhergehenden Ansprüche, wobei der Schritt a) bei Temperaturen zwischen 600 °C und 1000 °C durchgeführt wird.

6. Betriebsverfahren nach einem der vorhergehenden Ansprüche, wobei der Schritt b) bei Temperaturen, die zwischen 400 °C und 800 °C liegen und um mindestens 100 °C niedriger als die Temperatur des Schritts a) sind, durchgeführt wird.

7. Betriebsverfahren nach einem der vorhergehenden Ansprüche, wobei die Schritte a) und b) bei Drücken zwischen 0 und 100 bar, vorzugsweise zwischen 4 und 80 bar durchgeführt werden.

8. Betriebsverfahren nach einem der vorhergehenden Ansprüche, wobei die N Reaktoren alle Reaktoren mit einem Stapel elementarer Elektrolysezellen vom SOEC-Typ sind, die jeweils von einer Kathode, einer Anode und einem Elektrolyten, der zwischen der Kathode und der Anode angeordnet ist, und einer Mehrzahl von elektrischen und fluidischen Verbindern, die jeweils zwischen zwei angrenzenden elementaren Zellen angeordnet sind, gebildet sind, wobei eine ihrer Flächen in elektrischem Kontakt mit der Anode einer der zwei elementaren Zellen und die andere ihrer Flächen in elektrischem Kontakt mit der Kathode der anderen der zwei elementaren Zellen steht.

9. Betriebsverfahren nach Anspruch 8, wobei der Schritt a) durchgeführt wird, indem entweder Wasserdampf H₂O oder ein Gemisch aus Wasserdampf und Kohlendioxid CO₂ jeder Kathode der P Reaktoren zugeführt und an diese verteilt wird, oder indem Wasserdampf jeder Kathode einer der zwei angrenzenden elementaren Zellen der P Reaktoren zugeführt und an diese verteilt wird, und Kohlendioxid der Kathode der anderen der zwei elementaren Zellen der P Reaktoren zugeführt und an diese verteilt wird, um an jeder Kathode der P Reaktoren entweder eine Hochtemperatur-Elektrolyse des Wasserdampfs H₂O oder eine Hochtemperatur-Co-Elektrolyse von Wasserdampf und Kohlendioxid durchzuführen.

10. Verfahren zur Herstellung von Methan CH₄ aus einer zeitweisen Energiequelle unter Einsatz des Betriebsverfahrens im Standby einer Power-to-Gas-Einheit nach einem der Ansprüche 1 bis 9, wobei der Schritt b) durchgeführt wird, wenn die zeitweise Quelle nicht mehr in der Lage ist, den ausreichenden Elektrizitätspegel für alle N Reaktoren zu erzeugen.

## Claims

1. Process for operating in starting mode or in standby mode a unit, termed power-to-gas unit, comprising a number N of reactors (1) having a stack of solid oxide type elemental electrolysis cells, the cathodes of which are made of methanation reaction catalyst material(s), the process comprising the following steps, when it is desired to carry out an increase in temperature of the N reactors or of a fraction thereof, or when the level of available electricity is insufficient to carry out a high-temperature electrolysis or a co-electrolysis of H₂O and CO₂ within all of the N reactors:
a/ a number P of reactors are supplied with electricity and, if required, with heat, and either steam H₂O, or a mixture of steam and carbon dioxide CO₂, is supplied and distributed to the cathodes of the P reactors so as to carry out, at each cathode of the P reactors, either a high-temperature electrolysis of the steam H₂O or a high-temperature co-electrolysis of steam and carbon dioxide,
b/ at least part of the gases resulting from the electrolysis or from the co-electrolysis is recovered and is supplied and distributed to each cathode of a number X of reactors not supplied with electricity, the number X being less than or equal to N-P, so as to carry out, at each cathode of the X reactors, a methanation by heterogeneous catalysis.

2. Operating process according to Claim 1, the process comprising a step of emission of carbon dioxide by a production source, from a production site, in particular chosen from energy production sites, such as nuclear power stations for the waste heat, biomass-methanization or biomass-gasification power stations for the waste heat and/or CO₂ emission, industrial production sites, such as cement works, steel industries for the waste heat and/or CO₂ emission, service industry buildings such as hospitals, closed-site transportation networks, or else elimination sites, such as waste heat-treatment units, etc.

3. Operating process according to Claim 1 or 2, wherein, in standby mode or starting mode, the heat requirements of the unit, including the SOEC reactors, are supplied by the waste heat of a production source, from a production site, in particular chosen from energy production sites, such as nuclear power stations for the waste heat, biomass-methanization or biomass-gasification power stations for the waste heat and/or CO₂ emission, industrial production sites, such as cement works, steel industries for the waste heat and/or CO₂ emission, service industry buildings such as hospitals, closed-site transportation networks, or else elimination sites, such as waste heat-treatment units.

4. Operating process according to one of the preceding claims, comprising a step c/ wherein the gases produced by methanation in the SOEC reactors during step b/ are introduced into the dedicated methanation reactors (6) of the power-to-gas unit.

5. Operating process according to one of the preceding claims, step a/ being carried out at temperatures of between 600°C and 1000°C.

6. Operating process according to one of the preceding claims, step b/ being carried out at temperatures of between 400°C and 800°C and at least 100°C below the temperature in step a/.

7. Operating process according to one of the preceding claims, steps a/ and b/ being carried out at pressures of between 0 and 100 bar, preferably of between 4 and 80 bar.

8. Operating process according to one of the preceding claims, the N reactors all being reactors having a stack of elemental electrolysis cells of SOEC type, each formed from a cathode, an anode and an electrolyte interposed between the cathode and the anode, and a plurality of electrical and fluid interconnectors, each arranged between two adjacent elemental cells with one of its faces in electrical contact with the anode of one of the two elemental cells and the other of its faces in electrical contact with the cathode of the other of the two elemental cells.

9. Operating process according to Claim 8, wherein step a/ is carried out by supplying and distributing to each cathode of the P reactors either steam H₂O, or a mixture of steam and carbon dioxide CO₂, or by supplying and distributing steam to each cathode of one of the two adjacent elemental cells of the P reactors and carbon dioxide is supplied and distributed to the cathode of the other of the two elemental cells of the P reactors so as to carry out, at each cathode of the P reactors, either a high-temperature electrolysis of the steam H₂O or a high-temperature co-electrolysis of steam and carbon dioxide.

10. Process for producing methane CH₄ from an "intermittent" energy source, implementing the process for operating in standby mode a power-to-gas unit according to one of Claims 1 to 9, step b/ being carried out when said intermittent source is no longer capable of producing the level of electricity sufficient for all the N reactors.
